# EUROPÄISCHE PATENTSCHRIFT

(11) **EP 0 557 292 B1**
(45) Veröffentlichungstag und Bekanntmachung des Hinweises auf die Patenterteilung: **13.04.1994**
(21) Anmeldenummer: 91917329.4
(22) Anmeldetag: 07.10.1991
(51) Int. Cl.: F16B 13/00, F16B 37/12, F16B 25/10, B25B 13/48

(54) **VORRICHTUNG ZUM BEFESTIGEN EINES GEGENSTANDES AN EINER LEICHTBAUWERKSTOFFWAND**
DEVICE FOR ATTACHING AN OBJECT TO A LIGHTWEIGHT-CONSTRUCTION WALL
DISPOSITIF POUR LA FIXATION D'UN OBJET SUR UNE PAROI EN MATERIAU DE CONSTRUCTION LEGER

(30) Priorität: 13.12.1990 DE 4039831
(43) Veröffentlichungstag der Anmeldung: 01.09.1993
(73) Patentinhaber: UPAT GMBH & CO, D-79312 Emmendingen (DE)
(72) Erfinder: GRÜN, Jürgen, D-7805 Bötzingen (DE); FRISCHMANN, Albert, D-7832 Kenzingen (DE)
(74) Vertreter: Rackette, Karl, Dipl.-Phys. Dr.-Ing
(86) Internationale Anmeldenummer: DE9100792
(87) Internationale Veröffentlichungsnummer: WO9210687

(56) Entgegenhaltungen:
- EP-A- 0 165 674
- EP-A- 0 425 358
- DE-C- 2 419 111
- US-A- 3 289 290

## Beschreibung

Die Erfindung betrifft eine Befestigungsvorrichtung zum Befestigen eines Gegenstandes an einer Leichtbauwerkstoffwand mit einem Einsatzkörper, der eine Innenhöhlung zur Aufnahme eines Befestigungselementes, eine über das Einsteckende des Einsatzkörpers vorstehende als flache Leiste ausgebildete Werkzeugklinge mit einer Bohrspitze zur Erzeugung einer zylindrischen Vorbohrung in der Leichtbauwerkstoffwand zur Aufnahme des Einsatzkörpers und ein selbstschneidendes Außengewinde aufweist, sowie mit einem drehschlüssig in die Innenhöhlung des Einsatzkörpers einführbaren Setzwerkzeug.

Die EP-B1-165 674 beschreibt eine derartige Befestigungsvorrichtung mit einem Einsatzkörper, der am Einsteckende über eine Öffnung und über eine das Einsteckende des mit einem selbstschneidenden Außengewinde versehenen Einsatzkörpers hinausragende Werkzeugklinge verfügt. Die Werkzeugklinge gestattet es, während des Setzens mit Hilfe der am vorderen Ende der Einsatzhülse angeordneten Werkzeugklinge in einem Leichtbauwerkstoff eine Vorbohrung für das Außengewinde des Einsatzkörpers zu erstellen. Beim Eindrehen eines als Schraube verwendeten Befestigungselementes nach dem Setzen des Einsatzkörpers in einen Leichtbauwerkstoff mit einer Materialstärke, die kleiner als die Länge des mit dem Außengewinde versehenen Einsatzkörpers ist, drückt das vordere Ende der Schraube die Werkzeugklinge seitlich aus dem Weg. Aus diesem Grunde kann der bekannte ohne Vorbohrung auskommende Einsatzkörper nur dann verwendet werden, wenn er länger als die Materialstärke des Leichtbauwerkstoffes ist. Eine Verwendung, bei der lediglich ein Sackloch und kein durchgehendes Loch entsteht, ist wegen der erforderlichen seitlichen Ausweichbewegung der Werkzeugklinge nicht möglich.

Aus der DE-C-2 419 111 ist ein Einsatzkörper zum Befestigen eines Gegenstandes in einer Leichtbauwerkstoffwand bekannt, der am einsteckseitigen Ende geschlossen ist und nach dem Erstellen einer zylindrischen Vorbohrung mit Hilfe einer Bohrmaschine in die zylindrische Vorbohrung mit Hilfe eines Setzwerkzeuges eingedreht wird. Beim Eindrehen in die zylindrische Vorbohrung schneidet sich das Außengewinde des Einsatzkörpers in den weichen Leichtbauwerkstoff ein, wobei zwischen den Gewindegängen das Material unzerstört bleibt. Auf diese Weise wird eine spreizdruckfreie Verankerung eines Befestigungselementes möglich, das nach dem Setzen des Einsatzkörpers in dessen axiale Innenhöhlung zum Befestigen eines Gegenstandes eingeschraubt wird.

In der US-A-3 289 290 sind ein Verfahren und eine Vorrichtung beschrieben, um eine Befestigungsschraube, die eine zylindrische Vorbohrung zum Einschrauben benötigt, in einem Arbeitsgang zu setzen. Die Befestigungsschraube, beispielsweise eine Holzschraube, ist dazu mit einer diese ganz durchsetzenden Längsbohrung versehen, durch die ein in einer Bohrmaschine eingespannter üblicher Bohrer gesteckt wird, um durch die Längsbohrung der Schraube hindurch ein Loch in den Befestigungsgrund zu bohren. Wenn die Vorbohrung erstellt ist, kommt ein zusammen mit dem Bohrer im Spannfutter befestigter Schraubendreher mit dem Kopf der Schraube in Eingriff, so daß diese in die gerade erstellte Vorbohrung eingeschraubt werden kann, ohne daß der Bohrer in einem ersten Arbeitsgang herausgezogen und die Schraube in einem zweiten Arbeitsgang getrennt eingeschraubt werden muß.

Ausgehend von diesem Stand der Technik liegt der Erfindung die Aufgabe zugrunde, eine Vorrichtung der eingangs erörterten Art zu schaffen, die materialsparend eine schnelle und einfache Montage in Leichtbauwerkstoffen beliebiger Materialstärke gestattet.

Diese Aufgabe wird erfindungsgemäß dadurch gelöst, daß die Werkzeugklinge am Setzwerkzeug ausgebildet ist und mit ihrer Bohrspitze durch die Innenhöhlung des Einsatzkörpers über dessen Einsteckende hinaus vorschiebbar ist.

Dadurch, daß das Setzwerkzeug mit einer Klinge über das Einsteckende des Einsatzkörpers hinausragt, ist es einerseits möglich, in einem einzigen Arbeitsgang beim Drehen des Setzwerkzeuges zunächst mit der Werkzeugklinge eine Vorbohrung zu erstellen, in die im Verlauf des Erstellens der Vorbohrung das Einsteckende des Einsatzkörpers eingreift und infolge der Drehbewegung mit seinem Außengewinde ein Gewinde einschneidet. Andererseits kann nach dem Zurückziehen des Setzwerkzeuges in die freiwerdende Innenhöhlung des Einsatzkörpers ein Befestigungselement, insbesondere eine Schraube, eingedreht werden, ohne daß deren Vorschub durch eine am Einsatzkörper vorgesehene Werkzeugklinge beeinträchtigt wird.

Zweckmäßige Weiterbildungen und Ausgestaltungen der Erfindung ergeben sich aus den Unteransprüchen und der nachfolgenden Beschreibung eines Ausführungsbeispiels der Erfindung anhand der Zeichnung. Es zeigen:
- Fig. 1: eine perspektivische Ansicht eines Setzwerkzeuges gemäß der Erfindung,
- Fig. 2: eine Seitenansicht des Einsatzkörpers gemäß der Erfindung,
- Fig. 3: eine Ansicht auf das in Fig. 2 links dargestellte hintere Ende des Einsatzkörpers,
- Fig. 4: eine Ansicht auf das in Fig. 2 rechts dargestellte Einsteckende des Einsatzkörpers in axialer Blickrichtung,
- Fig. 5: den Einsatzkörper mit eingestecktem Setzwerkzeug, dessen Werkzeugaufnahme im Bohrfutter einer Bohrmaschine eingespannt ist und dessen Werkzeugklinge während des Setzvorgangs eine Vorbohrung in einer Leichtbauwerkstoffwand erstellt,
- Fig. 6: eine Schnittansicht entlang der Linie VI-VI in Fig. 5,
- Fig. 7: den Einsatzkörper und das Setzwerkzeug nach dem Setzen in die Leichtbauwerkstoffwand, teilweise aufgeschnitten in einer Seitenansicht,
- Fig. 8: den in die Leichtbauwerkstoffwand eingesetzten Einsatzkörper nach dem Eindrehen einer Befestigungsschraube zum Befestigen eines Gegenstands an der Leichtbauwerkstoffwand und
- Fig. 9: einen Querschnitt durch den in Fig. 8 dargestellten Einsatzkörper zur Veranschaulichung der Lage der Befestigungsschraube in der kreuzförmigen Innenhöhlung des Einsatzkörpers.

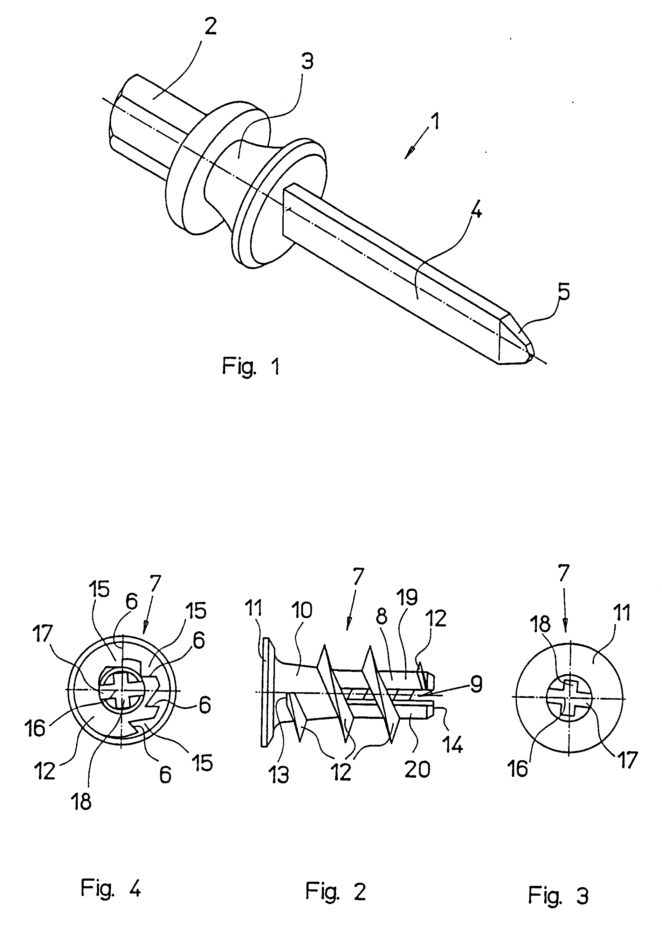

In Fig. 1 erkennt man in perspektivischer Darstellung ein Setzwerkzeug 1, das mit seiner sechskantigen Werkzeugaufnahme 2 in das Bohrfutter einer Bohrmaschine eingespannt werden kann. An der sechskantigen Werkzeugaufnahme 2 ist ein Zwischenstück 3 angeformt, aus dem eine Werkzeugklinge 4 herausragt. Das Zwischenstück 3 ist kegelförmig, um einen besseren Halt bei der Montage zu ermöglichen. Während die Werkzeugaufnahme 2 und das Zwischenstück 3 vorzugsweise aus Kunststoff bestehen, besteht die Werkzeugklinge 4 aus einem Metall ausreichender Härte und Abriebfestigkeit.

Die Werkzeugklinge 4 ist als verhältnismäßig flache Leiste konstanter Dicke und konstanter Breite ausgebildet und geht in eine Bohrspitze 5 über, die dreieckförmig mit abgerundeter Spitze ausgebildet ist, wobei deren Materialdicke nach vorne abnimmt, so daß die Werkzeugklinge 4 mit ihrer Bohrspitze 5 ein dolchartiges Aussehen hat.

Die abgerundete Bohrspitze 5 hat auch eine Gestalt, die es möglich macht, mit dem Setzwerkzeug 1 Kreuzschlitzschrauben einzudrehen oder zu lösen. Auf diese Weise kann das Setzwerkzeug 1 auch als Behelfs-Schraubendreher verwendet werden.

Die Werkzeugklinge 4 hat beispielsweise eine Materialstärke von 1,3 Millimeter und eine Länge von etwa 40 Millimeter. Das Zwischenstück 3 kann eine Länge von 10 Millimetern und die Werkzeugaufnahme 2 eine Länge von 15 Millimetern aufweisen.

Das Setzwerkzeug 1 dient zum Setzen eines in Fig. 2 dargestellten Einsatzkörpers 7, der aus Kunststoff oder Zink-Druckguß hergestellt ist. Der Einsatzkörper 7 weist einen zylindrischen Kernabschnitt 8 auf, durch den sich ein in Fig. 2 erkennbarer Schlitz 9 erstreckt. Der geschlitzte zylindrische Kernabschnitt 8 geht in einen konischen Bereich 10 über, der am hinteren Ende des Einsatzkörpers 7 in einen Kragen 11 ausläuft.

Der zylindrische Kernabschnitt 8 und der konische Bereich 10 sind von einem Gewinde 12 großer Steigung umgeben, das als selbstschneidendes Außengewinde ausgebildet ist, so daß der Einsatzkörper 7 beim Eindrehen in eine Bohrung in einem Leichtbauwerkstoff ein Gewinde schneidet, in dem der Einsatzkörper 7 spreizdruckfrei Halt findet.

Das selbstschneidende Gewinde 12 endet an der mit 13 bezeichneten Stelle vor dem Kragen 11 am hinteren Ende des Einsatzkörpers 7 und läuft am vorderen Ende oder Einsteckende 14 des Einsatzkörpers 7 unter immer kleiner werdender Gewindehöhe aus, wie man am besten in Fig. 4 erkennt.

In Fig. 4 erkennt man auch, daß in dem dem Einsteckende 14 benachbarten Gewindegang des Gewindes 12 mehrere Ausnehmungen 15 vorgesehen sind, so daß mehrere Schneidkanten 6 gebildet werden, die das Einschneiden des Gewindes 12 in einen Leichtbauwerkstoff, insbesondere eine Gipskartonplatte, erleichtern. Der konische Bereich 10 verfestigt dabei die Gipskartonplatte am hinteren Ende des Einsatzkörpers 7 und ermöglicht dadurch höhere Haltekräfte der Befestigungsvorrichtung.

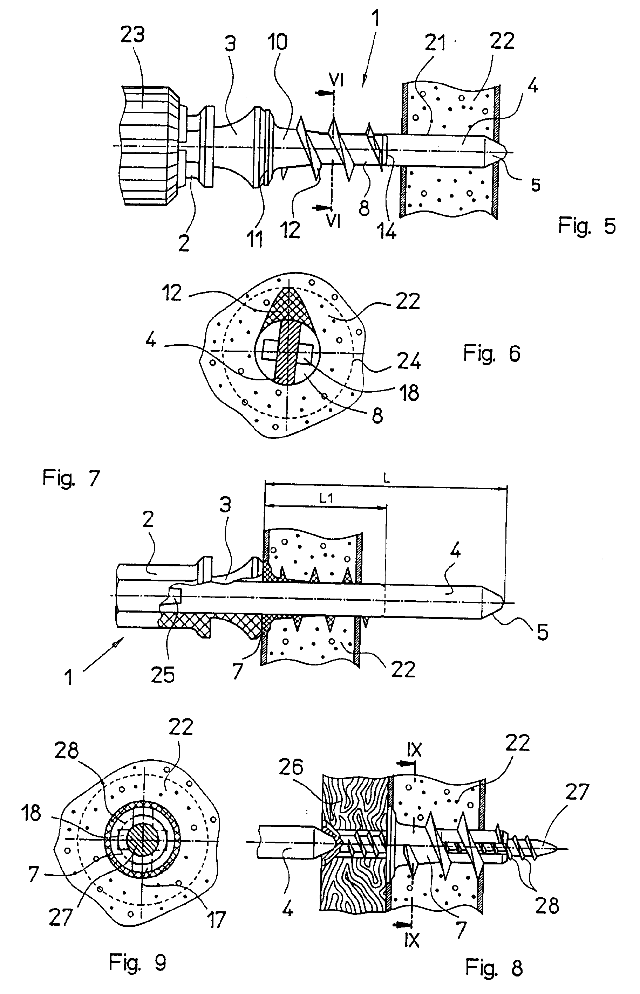

Fig. 3 zeigt eine Ansicht auf das hintere Ende des Einsatzkörpers 7 und den in Draufsicht ringförmigen Kragen 11. Sowohl in Fig. 3 als auch in Fig. 4 erkennt man eine Innenhöhlung 16 mit einem kreuzförmigen Querschnitt, die sich in axialer Richtung durch den Einsatzkörper 7 erstreckt. Die kreuzförmige Innenhöhlung dient nach dem Setzen des Einsatzkörpers 7 zur Aufnahme eines Befestigungselementes, insbesondere einer Schraube 27 (Fig. 8), die sich mit ihrem Gewinde in den die Innenhöhlung 16 umgebenden Kunststoff einschneiden kann.

Die Innenhöhlung 16 besteht aus einer breiteren Flachnut 17, die in den Figuren 2, 3 und 4 fast horizontal verläuft, und einer schmaleren Flachnut 18, die in den Figuren 3 und 4 fast vertikal verläuft. Die breite Flachnut 17 und die schmale Flachnut 18 durchqueren den Einsatzkörper 7 vom hinteren Ende am Kragen 11 bis zum Einsteckende 14.

Die breitere Flachnut 17 weist eine Breite auf, die dem Kerndurchmesser des Gewindes 12 bzw. dem Außendurch- messer des zylindrischen Kernabschnitts 8 entspricht. Aus diesem Grunde bildet die breite Flachnut 17 im zylindrischen Kernabschnitt 8 den bereits erwähnten Schlitz 9, durch den ein erster Schenkel 19 und ein zweiter Schenkel 20 gebildet werden, die durch die um sie herumgelegten Gewindegänge des Gewindes 12 mechanisch so stabilisiert sind, daß der Schlitz 9 zu keiner nennenswerten Schwächung des Einsatzkörpers 7 im vorderen Bereich führt.

Die Breite der Werkzeugklinge 4 entspricht der Breite der breiteren Flachnut 17 und somit dem Durchmesser des zylindrischen Kernabschnitts 8. Dies erkennt man besonders deutlich in Fig. 5.

Die Fig. 5 zeigt eine Leichtbauwerkstoffwand 22, insbesondere eine Gipskartonplatte, in der die Werkzeugklinge 4 eine fast durchgehende zylindrische Vorbohrung 21 erstellt hat, nachdem das Setzwerkzeug 1 vom Kragen 11 her durch die Flachnut 17 des Einsatzkörpers 7 hindurchgesteckt worden ist, bis das Zwischenstück 3 gegen den Kragen 11 anliegt und nachdem das mit seiner Werkzeugaufnahme 2 in ein Bohrfutter 23 einer Bohrmaschine eingespannte Setzwerkzeug 1 in Drehungen versetzt worden ist.

Bei den mit Hilfe der Bohrmaschine erzeugten Drehungen gräbt sich die Spitze 5 des Setzwerkzeugs 1 zunächst durch die obere Schicht, insbesondere eine Kartonschicht, der Leichtbauwerkstoffplatte 22 hindurch. Anschließend durchquert sie die Leichtbauwerkstoffplatte 22 und tritt wie in Fig. 5 zu erkennen ist, an der gegenüberliegenden Seite der Leichtbauwerkstoffplatte 22 wieder aus.

Kurz danach gelangt das Einsteckende 14 des zylindrischen Abschnitts 8, dessen Durchmesser gleich der Breite der Werkzeugklinge 4 ist, in die gerade erstellte Vorbohrung 21 im Leichtbauwerkstoff 22, sobald der erste Gewindegang des Gewindes 12 mit seinen Schneidkanten 6 mit dem Material der Leichtbauwerkstoffplatte 22 in Eingriff steht, so daß der Einsatzkörper 7 in dieser ein Gewindeloch erstellt.

Fig. 6 veranschaulicht in einem Schnitt entlang der Linie VI-VI der Fig. 5 die geometrischen Verhältnisse und zeigt insbesondere wie die Breite der Werkzeugklinge 4 die breitere Flachnut 17 ganz ausfüllt und bis zur Oberfläche des zylindrischen Kernabschnitts 8 reicht. Das Gewinde 12 erstellt dabei ein bis zum gestrichelten Kreis 24 reichendes Gewinde.

Nach wenigen Umdrehungen ist die Erstellung des Gewindes in der Leichtbauwerkstoffplatte 22 beendet und der Einsatzkörper 7 in der in Fig. 7 erkennbaren Weise eingeschraubt. Statt mit einer Bohrmaschine kann der Setzvorgang auch mit Hilfe eines Kreuzschlitz-Schraubenziehers vorgenommen werden, weshalb in der Werkzeugaufnahme 2 eine axiale Vertiefung zum formschlüssigen Einsetzen eines Kreuzschlitz-Schraubendrehers aufweist. Eine konische Aussparung 25 in der Werkzeugklinge 4 ist so in der axialen Vertiefung angeordnet, daß der Rand der Aussparung mit der Spitze des Kreuzschlitz-Schraubenziehers gut in Eingriff kommt.

Fig. 7 veranschaulicht insbesondere auch das Verhältnis der Länge L1 des Einsatzkörpers 7 zur Länge L der aus dem Zwischenstück 3 herausragenden Werkzeugklinge 4. Die Länge der Werkzeugklinge 4 außerhalb des Zwischenstücks 3 ist etwa 1,5 bis 3 mal so groß wie die Länge des Einsatzkörpers 7.

Wenn der in Fig. 7 dargestellte Montagezustand erreicht ist, kann das Setzwerkzeug 1 aus dem in der Leichtbauwerkstoffplatte 22 eingeschraubten Einsatzkörper 7 herausgezogen werden, um einen Gegenstand 26 mit Hilfe einer Schraube 27 zu befestigen, die mit Hilfe des Setzwerkzeugs 1 durch den zu befestigenden Gegenstand 26 in der Innenhöhlung 16 des Einsatzkörpers 7 eingeschraubt werden kann. Nach dem Einschrauben der Schraube 27 wird die in Fig. 8 veranschaulichte spreizdruckfreie Befestigung des Gegenstandes 26 an der Leichtbauwerkstoffplatte 22 erhalten.

Fig. 9 veranschaulicht einen Querschnitt durch die Leichtbauplatte 22 und den Einsatzkörper 7 sowie die Schraube 27 zur Verdeutlichung, wie das Gewinde 28 der Schraube 27 in das Kunststoffmaterial zwischen der breiten Flachnut 17 und der schmalen Flachnut 18 eingeschnitten ist.

Aus der obigen Beschreibung ergibt sich, daß der Einsatzkörper 7 in einem einzigen Arbeitsgang gesetzt werden kann, ohne daß es eines gesonderten Arbeitsgangs zur Erstellung der Vorbohrung 21 bedarf. Dadurch ergibt sich eine einfache und schnelle Montage mit niedrigem Materialaufwand.

## Patentansprüche

1. Befestigungsvorrichtung zum Befestigen eines Gegenstandes an einer Leichtbauwerkstoffwand mit einem Einsatzkörper, der eine Innenhöhlung zur Aufnahme eines Befestigungselementes, eine über das Einsteckende des Einsatzkörpers vorstehende als flache Leiste ausgebildete Werkzeugklinge mit einer Bohrspitze zur Erzeugung einer zylindrischen Vorbohrung in der Leichtbauwerkstoffwand zur Aufnahme des Einsatzkörpers und ein selbstschneidendes Außengewinde aufweist, sowie mit einem drehschlüssig in die Innenhöhlung des Einsatzkörpers einführbaren Setzwerkzeug, dadurch gekennzeichnet, daß die Werkzeugklinge (4) am Setzwerkzeug (1) ausgebildet ist und mit ihrer Bohrspitze (5) durch die Innenhöhlung (16, 17) des Einsatzkörpers (7) über dessen Einsteckende (14) hinaus vorschiebbar ist.

2. Vorrichtung nach Anspruch 1, dadurch gekennzeichnet, daß die Werkzeugklinge (4) dolchartig mit einer sich symmetrisch verjüngenden Bohrspitze (5) ausgebildet ist.

3. Vorrichtung nach Anspruch 1, dadurch gekennzeichnet, daß die Werkzeugklinge (4) einen rechteckförmigen Querschnitt sowie eine Länge aufweist, die 1,5 bis 3 mal der Länge des Einsatzkörpers (7) entspricht.

4. Vorrichtung nach Anspruch 1, dadurch gekennzeichnet, daß die Werkzeugklinge (4) an dem der Bohrspitze (5) gegenüberliegenden Ende eine Werkzeugaufnahme (2) aufweist.

5. Vorrichtung nach Anspruch 4, dadurch gekennzeichnet, daß die Werkzeugaufnahme (2) einen sechskantigen Abschnitt und an dem der Bohrspitze (5) gegenüberliegenden Ende der Werkzeugklinge (4) als Anschlag für das rückwärtige Ende des Einsatzkörpers (7) ein Zwischenstück (3) aufweist.

6. Vorrichtung nach Anspruch 5, dadurch gekennzeichnet, daß der sechskantige Abschnitt mit einer axialen Vertiefung zum formschlüssigen Einsetzen eines Kreuzschlitz-Schraubendrehers versehen ist.

7. Vorrichtung nach Anspruch 6, dadurch gekennzeichnet, daß die flache Leiste mit dem der Bohrspitze (5) gegenüberliegenden Ende in die axiale Vertiefung der Werkzeugaufnahme (2) hineinreicht und mit einer konischen Aussparung (25) zum formschlüssigen Eingriff mit dem Kreuzschlitz-Schraubendreher versehen ist.

8. Vorrichtung nach einem der Ansprüche 1 bis 7, dadurch gekennzeichnet, daß der Kerndurchmesser (8) des Außengewindes (12) am Einsteckende (14) gleich der Breite der durch die Innenhöhlung (16, 17) vorschiebbaren Werkzeugklinge (4) ist.

9. Vorrichtung nach Anspruch 8, dadurch gekennzeichnet, daß der Kerndurchmesser (8) des Außengewindes (12) an dem dem Einsteckende (14) gegenüberliegenden Ende auf einen Durchmesser (10) steigt, der größer als die Breite der Werkzeugklinge (4) ist.

10. Vorrichtung nach einem der Ansprüche 1 bis 9, dadurch gekennzeichnet, daß die Gewindehöhe des selbstschneidenden Außengewindes (12) ausgehend vom Einsteckende (14), an der das Gewinde (12) ausläuft, zunimmt.

11. Vorrichtung nach Anspruch 10, dadurch gekennzeichnet, daß an dem dem Einsteckende (14) benachbarten Gewindegang zahnförmige Ausnehmungen (15) vorgesehen sind, durch die Schneidkanten (6) gebildet werden.

12. Vorrichtung nach einem der vorstehenden Ansprüche, dadurch gekennzeichnet, daß die Innenhöhlung (16) im Querschnitt kreuzförmig ist, wobei die in radialer Richtung breitere Flachnut (17) die Höhe der Dicke der Werkzeugklinge (4) und unter Bildung eines Längsschlitzes (9) die Breite der Werkzeugklinge (4) und des Kerndurchmessers (8) des Einsatzkörpers (7) am Einsteckende (14) hat, während die rechtwinklig zur breiteren Flachnut (17) entlang der Längsachse des Einsatzkörpers (7) verlaufende schmalere Flachnut (18) eine Breite hat, die überall kleiner als der Kerndurchmesser (8) des Außengewindes (12) des Einsatzkörpers (7) ist.

## Claims

1. A fixing device for fixing an object to a lightweight building material wall comprising an insert body which has an internal cavity for receiving a fixing element, a tool blade which is in the form of a flat bar and which projects beyond the insertion end of the insert body, with a boring tip for producing a cylindrical pilot bore in the lightweight building material wall for receiving the insert body, and a self-tapping external screwthread, and further comprising a setting tool which can be non-rotatably introduced into the cavity in the insert body, characterised in that the tool blade (4) is provided on the setting tool (1) and can be advanced with its boring tip (5) through the cavity (16, 17) of the insert body (7) beyond the insertion end (14) thereof.

2. A device according to claim 1 characterised in that the tool blade (4) is of a dagger-like configuration with a symmetrically tapering boring tip (5).

3. A device according to claim 1 characterised in that the tool blade (4) is of a rectangular cross-section and a length which corresponds to from 1.5 to 3 times the length of the insert body (7).

4. A device according to claim 1 characterised in that the tool blade (4) has a tool mounting means (2) at the end remote from the boring tip (5).

5. A device according to claim 4 characterised in that the tool mounting means (2) has a hexagonal portion and at the end of the tool blade (4) which is opposite the boring tip (5) an intermediate portion (3) as an abutment for the rearward end of the insert body (7).

6. A device according to claim 5 characterised in that the hexagonal portion is provided with an axial recess for positively locking insertion of a cross-slot screwdriver.

7. A device according to claim 6 characterised in that the flat bar extends with its end opposite the boring tip (5) into the axial recess in the tool mounting means (2) and is provided with a conical opening (25) for the positively locking engagement with the cross-slot screwdriver.

8. A device according to one of claims 1 to 7 characterised in that the core diameter (8) of the external screwthread (12) at the insertion end (14) is equal to the width of the tool blade (4) which can be advanced through the cavity (16, 17).

9. A device according to claim 8 characterised in that the core diameter (8) of the external screwthread (12) rises at the end opposite the insertion end (14) to a diameter (10) which is larger than the width of the tool blade (4).

10. A device according to one of claims 1 to 9 characterised in that the screwthread height of the self-tapping external screwthread (12) increases starting from the insertion end (14) at which the screwthread (12) comes to an end.

11. A device according to claim 10 characterised in that provided at the screwthread flight adjacent the insertion end (14) are tooth-like openings (15) which form cutting edges (6).

12. A device according to one of the preceding claims characterised in that the cavity (16) is cross-shaped in cross-section, wherein the groove portion(17)which is wider in the radial direction is of a height corresponding to the thickness of the tool blade (4) and, forming a longitudinal slot (9), is of the width of the tool blade (4) and the core diameter (8) of the insert body (7) at the insertion end (14) while the narrower groove portion (18) which extends at a right angle to the wider groove portion (17) along the longitudinal axis of the insert body (7) is of a width which is everywhere smaller than the core diameter (8) of the external screwthread (12) of the insert body ( 7).

## Revendications

1. Dispositif pour la fixation d'un objet sur une paroi en matériau de construction léger, comprenant un insert présentant un évidement intérieur prévu pour recevoir un élément de fixation, une lame d'outil en forme de tige plate dépassant de l'extrémité d'introduction de l'insert et ayant une pointe de perçage pour réaliser un avant-trou cylindrique dans la paroi en matériau de construction léger pour loger l'insert, et pourvu d'un filetage extérieur autotaraudeur, ainsi qu'un outil de pose pouvant être introduit dans l'évidement intérieur de l'insert en se bloquant par rotation, caractérisé en ce que la lame d'outil (4) est formée sur l'outil de pose (1) et que sa pointe de perçage (5) peut être introduite dans l'évidement intérieur (16, 17) de l'insert (7) en dépassant de son extrémité d'introduction (14).

2. Dispositif selon la revendication 1, caractérisé en ce que la lame d'outil (4), est en forme de poignard avec une pointe de perçage (5) qui se termine en se rétrécissant d'une façon symétrique.

3. Dispositif selon la revendication 1, caractérisé en ce que la lame d'outil (4) présente une section rectangulaire et une longueur qui correspond à 1,5 à 3 fois la longueur de l'insert (7).

4. Dispositif selon la revendication 1, caractérisé en ce que la lame d'outil (4) présente, du côté opposé à la pointe de perçage (5) un manche d'outil (2).

5. Dispositif selon la revendication 4, caractérisé en ce que le manche d'outil (2) a une coupe hexagonale et comporte, du côté de la lame d'outil (4) qui est opposé à la pointe de perçage (5), une partie intermédiaire (3) servant de butée pour l'extrémité arrière de l'insert (7).

6. Dispositif selon la revendication 5, caractérisé en ce que la section hexagonale comporte une cavité axiale permettant l'engagement positif d'un tournevis cruciforme.

7. Dispositif selon la revendication 6, caractérisé en ce que la tige plate aboutit, du côté opposé à la pointe de perçage (5) à la cavité axiale du manche d'outil (2), et comporte un logement conique (25) permettant l'engagement positif d'un tournevis cruciforme.

8. Dispositif selon l'une quelconque des revendications 1 à 7, caractérisé en ce que le diamètre du noyau (8) du filetage (12) est égal, à l'extrémité d'introduction (14), à la largeur de la lame d'outil (4) prévue pour passer à l'intérieur de l'évidement intérieur (16, 17).

9. Dispositif selon la revendication 8, caractérisé en ce que le diamètre du noyau (8) du filetage (12) augmente en allant vers l'extrémité opposée à l'extrémité d'introduction (14) jusqu'à un diamètre (10) qui est supérieur à la largeur de la lame d'outil (4).

10. Dispositif selon l'une quelconque des revendications 1 à 9, caractérisé en ce que la hauteur des filets du filetage autotaraudeur (12) augmente en partant de l'extrémité d'introduction (14) à laquelle se termine le filetage (12).

11. Dispositif selon la revendication 10, caractérisé en ce que sur la première spire du filetage, voisine de l'extrémité d'introduction (14), sont prévues plusieurs indentations (15), de telle sorte que plusieurs arêtes de coupe (6) sont constituées.

12. Dispositif selon l'une quelconque des revendications précédentes, caractérisé en ce que l'évidement intérieur (16) a une section cruciforme, la hauteur de la rainure (17) la plus large dans le sens radial correspond à l'épaisseur de la lame d'outil (4) et sa largeur, par la formation d'une fente longitudinale (9) correspond à la largeur de la lame d'outil (4) et au diamètre du noyau (8) du filetage (12) de l'insert (7) à son extrémité d'introduction (14), tandis que la largeur de la rainure la plus étroite (18) perpendiculaire à la rainure la plus large (17) et qui s'étend le long de l'axe longitudinal de l'insert (7) est constamment inférieure au diamètre du noyau (8) du filetage (12) de l'insert (7).
